# EUROPEAN PATENT APPLICATION

(11) **EP 3 176 056 A1**
(43) Date of publication of application: **07.06.2017**
(21) Application number: 14898710.0
(22) Date of filing: 24.09.2014
(51) Int. Cl.: B62D 5/04

(54) **STEERING DEVICE**

(30) Priority: 31.07.2014 JP 2014156643
(71) Applicant: KYB Corporation, Tokyo 105-6111 (JP)
(72) Inventor: SHIMIZU, Tetsuro, Tokyo 105-6111 (JP); MIYAKE, Soichiro, Tokyo 105-6111 (JP)
(74) Representative: Grünecker Patent- und Rechtsanwälte PartG mbB
(86) International application number: PCT/JP2014/075313
(87) International publication number: WO 2016/017043

(57) **Abstract**

A steering device 100 includes a steering shaft 2 which is rotated by a steering torque input from a bar handle 1, an electric motor 20 which applies a rotational torque for assisting the steering torque to the steering shaft 2, a first deceleration unit 40 which decelerates and outputs the rotation of the electric motor 20, a second deceleration unit 50 which transmits an output of the first deceleration unit 40 to the steering shaft 2 while decelerating the output; and a link mechanism 10 which turns wheels by converting the rotation of the steering shaft 2.

## Description

### TECHNICAL FIELD

The prevent invention relates to a steering device.

### BACKGROUND ART

JP2006-256577A discloses a steering device in which an electric steering assistance unit is interposed between a steering shaft and a wheel-side steering member and a pitman arm coupled to the wheel-side steering member is coupled to left and right wheels via tie rods.

### SUMMARY OF INVENTION

If there is a small space in a vehicle front part, it may be difficult to convert the rotation of an output shaft into a turning force of wheels by a rack and a pinion.

In such a case, it is considered to convert the rotation of the output shaft into the turning force of the wheels by a link mechanism as in the steering device disclosed in JP2006-256577A. However, since the rotation of the output shaft is not decelerated by a rack and a pinion in this case, the turning force of the wheels may be insufficient.

The present invention was developed in view of the above problem and aims to improve a turning force in a steering device for converting a steering torque into the turning force by a link mechanism.

According to one aspect of the present invention, a steering device includes a steering shaft which is rotated by a steering torque input from a steering handle, an electric motor which applies a rotational torque for assisting the steering torque to the steering shaft, a first deceleration unit which decelerates and outputs the rotation of the electric motor, a second deceleration unit which transmits an output of the first deceleration unit to the steering shaft while decelerating the output; and a link mechanism which turns wheels by converting the rotation of the steering shaft.

### BRIEF DESCRIPTION OF DRAWINGS

FIG. 1 is a configuration diagram of a steering device according to an embodiment of the present invention,
FIG. 2 is a configuration diagram of a link mechanism of the steering device according to the embodiment of the present invention,
FIG. 3 is a sectional view of a deceleration unit of a steering device according to a first embodiment of the present invention,
FIG. 4 is a sectional view of a deceleration unit of a steering device according to a second embodiment of the present invention, and
FIG. 5 is a sectional view of a deceleration unit of a steering device according to a third embodiment of the present invention.

### DESCRIPTION OF EMBODIMENTS

Hereinafter, embodiments of the present invention are described with reference to the drawings.

### (First Embodiment)

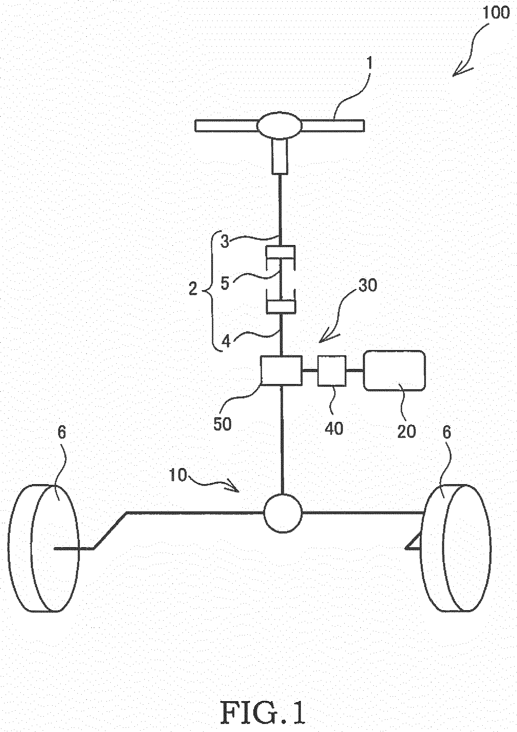

With reference to FIGS. 1 to 3, the overall configuration of a steering device 100 according to a first embodiment of the present invention is described.

The steering device 100 is a device mounted in a vehicle for turning wheels 6 by converting a steering torque applied to a steering handle by a driver.

As shown in FIG. 1, the steering device 100 includes a bar handle 1 as a steering handle to which a steering torque is input by the operation of the driver, a steering shaft 2 which is rotated by the steering torque input from the bar handle 1 and a link mechanism 10 which turns the wheels 6 by converting the rotation of the steering shaft 2.

The bar handle 1 is a handle steerable to left and right in a range of 90° from a neutral position, i.e. a handle having a maximum steering angle of 180° or smaller.

The steering shaft 2 includes an input shaft 3 which is linked to the bar handle 1 and to which a steering torque is transmitted, an output shaft 4 whose lower end is linked to the link mechanism 10, and a torsion bar 5 which couples the input shaft 3 and the output shaft 4. The steering torque input to the bar handle 1 by the operation of the driver is transmitted to the output shaft 4 via the input shaft 3 and the torsion bar 5 to rotate the output shaft 4. The rotation of the output shaft 4 is converted into a linear motion by the link mechanism 10, whereby the wheels 6 are turned.

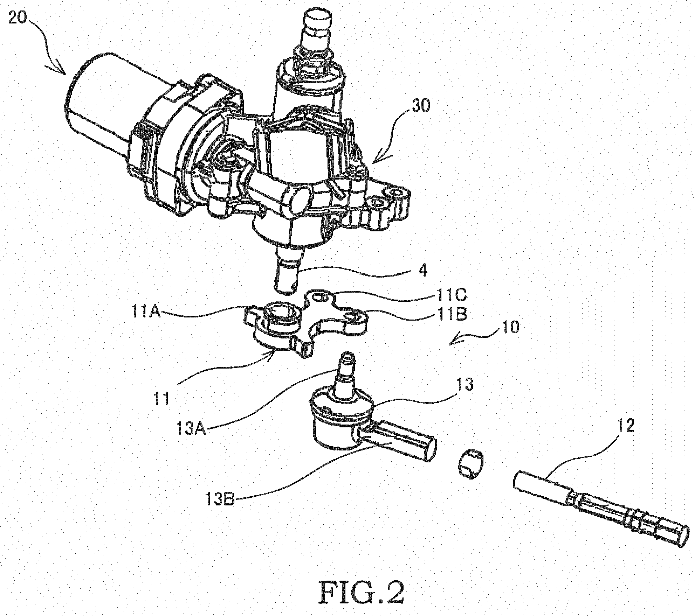

As shown in FIG. 2, the link mechanism 10 includes an arm member 11 which is coupled to the output shaft 4 and rotates with the rotation of the output shaft 4, tie rods 12 which are coupled to the wheels 6, and rod ends 13 which couple the arm member 11 and the tie rods 12.

The arm member 11 includes an output shaft hole 11A into which the output shaft 4 is inserted to be coupled, and a pair of coupling holes 11B, 11C which are separated from the output shaft hole 11A and provided substantially in parallel to the output shaft hole 11A.

The rod end 13 is a ball joint for coupling the tie rod 12 and the arm member 11. One shaft 13A in the rod end 13 is inserted into one coupling hole 11B of the arm member 11 to be coupled. Another shaft 13B in the rod end 13 is coupled to one end part of the tie rod 12. The wheel 6 is coupled to another end part of the tie rod 12 via a knuckle arm or the like (not shown). In FIG. 2, only the tie rod 12 and the rod end 13 coupled to one wheel 6 are shown and a tie rod to be coupled to the other wheel 6 and a rod end to be coupled to the other coupling hole 11C of the arm member 11 are not shown.

The arm member 11 rotates about the output shaft 4 with the rotation of the output shaft 4. The rod end 13 coupled at a position distant from the output shaft 4 moves along an arc centered on the output shaft 4 with the rotation of the arm member 11. This causes the rotation of the output shaft 4 to be transmitted as a linear motion to the tie rod 12 via the rod end 13. In this way, the rotation of the output shaft 4 in the steering shaft 2 is converted into the turning force of the wheels 6 by the link mechanism 10. Thus, the steering torque can be converted into the turning force of the wheels 6 by the link mechanism 10 even if a rack and a pinion are not provided, wherefore a space in a vehicle front part, particularly that in an underbody of the vehicle can be saved. In other words, even if a space in the vehicle front part is small and it is difficult to provide a rack and a pinion, the rotation of the output shaft 4 can be converted into the turning force of the wheels 6 by the link mechanism 10.

As shown in FIGS. 1 and 2, the steering device 100 further includes an electric motor 20 for applying a rotational torque for assisting the steering torque to the steering shaft 2 and a deceleration unit 30 for transmitting the rotation of the electric motor 20 to the steering shaft 2 while decelerating it.

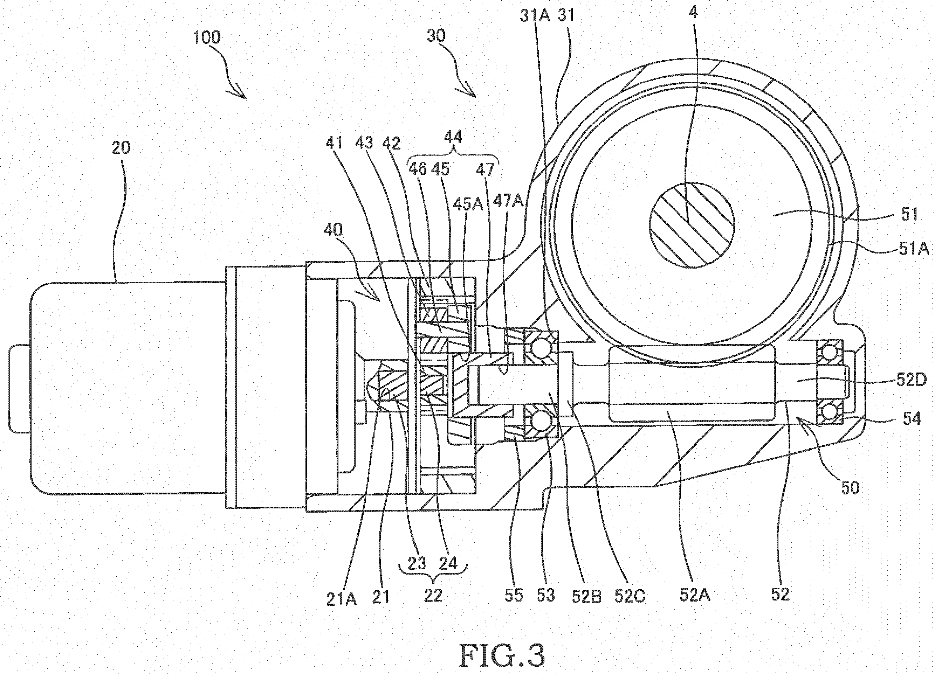

The electric motor 20 is a power source for applying a rotational torque for assisting the steering of the bar handle 1 by the driver. The rotational torque output from an output shaft 21 (see FIG. 3) by the electric motor 20 is computed by a controller (not shown) based on the amount of torsion of the torsion bar 5 twisted by the operation of the bar handle 1 by the driver detected by a torque sensor (not shown). The rotational torque output by the electric motor 20 is transmitted as an assisting force to the output shaft 4 of the steering shaft 2 while being decelerated by the deceleration unit 30. As just described, the electric motor 20 is driven based on a detection result of the torque sensor for detecting the steering torque input from the bar handle 1 and the steering of the bar handle 1 by the driver is assisted. As shown in FIG. 3, a recess part 21A, which is a female serration, is formed on a rotary shaft 21 of the electric motor 20 and a motor coupling shaft 22, which is a male serration, is serration-connected to the recess part 21A.

As shown in FIG. 3, the deceleration unit 30 includes a first deceleration unit 40 for decelerating and outputting the rotation of the electric motor 20 and a second deceleration unit 50 for transmitting an output of the first deceleration unit 40 to the output shaft 4 while decelerating it. The first and second deceleration units 40, 50 are housed in a gear case 31 to which the electric motor 20 is coupled.

The first deceleration unit 40 is a planetary gear mechanism including a sun gear 41 coupled to the rotary shaft 21 of the electric motor 20, a ring gear 42 provided at an outer side of the sun gear 41 and fixed to the gear case 31, a plurality of planetary gears 43 provided between the sun gear 41 and the ring gear 42 and engaged with each of the sun gear 41 and the ring gear 42 and a carrier 44 for coupling the plurality of planetary gears 43 to each other.

The sun gear 41 is coupled to the rotary shaft 21 of the electric motor 20 via the motor coupling shaft 22. One end part 23 of the motor coupling shaft 22 is inserted into the rotary shaft 21 of the electric motor 20 to be serration-connected, and another end part 24 is inserted into the sun gear 41 to be serration-connected. In this way, the rotation of the electric motor 20 is transmitted to the sun gear 41 via the motor coupling shaft 22.

The plurality of planetary gears 43 are provided at equal angular intervals at the outer side of the sun gear 41 and engaged with each of the sun gear 41 and the ring gear 42. When the sun gear 41 rotates with the rotation of the electric motor 20, the planetary gears 43 rotate about the sun gear 41. In FIG. 3, only a single planetary gear 43 is shown and the other planetary gears 43 are not shown.

The carrier 44 includes a plate-like flange part 45 with a through hole 45A in a radial central part, a plurality of coupling pins 46 as a coupling part provided on the flange part 45 and to be respectively press-fitted into the plurality of planetary gears 43, and a connecting member 47 in the form of a bottomed tube whose bottom part is to be press-fitted into the through hole 45A of the flange part 45. The connecting member 47 includes an opening 47 formed on a side near the second deceleration unit 50.

The second deceleration unit 50 includes a worm wheel 51 coupled to the output shaft 4 of the steering shaft 2, and a worm shaft 52 engaged with the worm wheel 51.

The worm shaft 52 is formed with a tooth part 52A engaged with a tooth part 51A of the worm wheel 51. The worm shaft 52 is housed in the gear case 31 coaxially with the rotary shaft 21 of the electric motor 20. One end 52B of the worm shaft 52 is inserted into the connecting member 47 of the carrier 44 in the first deceleration unit 40 to be serration-connected.

Both ends of the worm shaft 52 are rotatably supported by a pair of bearings 53, 54. The bearing 53 supporting the one end 52B of the worm shaft 52 on a side near the electric motor 20 is held between a lock nut 55 and a step part 31A formed on the gear case 31, the lock nut 55 and the step part 31A being juxtaposed in an axial direction. Further, a locking part 52C having a larger outer diameter than an inner diameter of the bearing 53 is formed on a part of the worm shaft 52 at an opposite side to the lock nut 55 across the bearing 53. Another end 52D of the worm shaft 52 is formed into a stepped shape and held in contact with the other bearing 54. In this way, a movement of the worm shaft 52 in the axial direction is restricted.

Next, deceleration by the first and second deceleration units 40, 50 is described.

When the electric motor 20 is driven to rotate the rotary shaft 21, the sun gear 41 of the first deceleration unit 40 rotates. With the rotation of the sun gear 41, the planetary gears 43 rotate about the sun gear 41 while being engaged with each of the ring gear 42 and the sun gear 41. In this way, the rotation of the electric motor 20 is decelerated at a speed reduction ratio corresponding to the numbers of teeth of the sun gear 41 and the ring gear 42 and output as the rotation of the carrier 44.

With the rotation of the carrier 44, the worm shaft 52 of the second deceleration unit 50 rotates. With the rotation of the worm shaft 52, the worm wheel 51 rotates while being decelerated at a speed reduction ratio corresponding to the number of teeth of the tooth part 52A on the worm shaft 52 and the number of teeth of the tooth part 51A on the worm wheel 51. Thus, the rotation of the worm shaft 52 is transmitted to the output shaft 4 while being decelerated at the speed reduction ratio corresponding to the number of teeth of the tooth part 52A on the worm shaft 52 and the number of teeth of the tooth part 51A on the worm wheel 51.

As just described, the rotation of the electric motor 20 is transmitted to the output shaft 4 while being decelerated at the speed reduction ratio corresponding to the numbers of teeth of the sun gear 41 and the ring gear 42 by the first deceleration unit 40 and further decelerated at the speed reduction ratio corresponding to the numbers of teeth of the worm shaft 52 and the worm wheel 51 by the second deceleration unit 50. Thus, the steering device 100 can apply a large rotational torque to the output shaft 4 by the electric motor 20 and can improve an assisting force for a steering torque by the electric motor 20.

If the rotation of the output shaft 4 is converted into the turning force of the wheels 6 by the link mechanism 10 without providing a rack and a pinion, the turning force of the wheels 6 may be insufficient since the rotation of the output shaft 4 is not decelerated by a rack and a pinion. However, since two deceleration units, i.e. the first and second deceleration units 40, 50 are provided between the electric motor 20 and the output shaft 4 in the steering device 100, a large rotational torque can be applied to the output shaft 4 by the electric motor 20. Thus, even in the case of converting the rotation of the output shaft 4 into the turning force of the wheels 6 by the link mechanism 10, the turning force of the wheels 6 can be ensured. As just described, according to the steering device 100, the turning force of the wheels 6 can be ensured and the space in the vehicle front part can be saved.

Further, when the steering handle is the bar handle 1 having a smaller steering angle than a round handle (steering wheel), a steering torque input from the bar handle 1 is small. Thus, the turning force of the wheels 6 may be insufficient in the case of steering a vehicle having a large turning angle of the wheels 6 or a vehicle having a large weight. Also when the steering handle is the bar handle 1 as just described, a large rotational torque can be applied as an assisting force to the steering shaft 2 by the small-size electric motor 20 according to the steering device 100, wherefore the turning force can be ensured. Thus, the bar handle 1 can be used also in a vehicle having a large turning angle of the wheels 6 or a vehicle having a large weight. Further, by using the bar handle 1 as the steering handle, operating parts of the underbody such as an accelerator pedal and a brake pedal can be integrated with the bar handle 1. Thus, in the steering device 100, the turning force of the wheels 6 can be ensured even if the steering handle is the bar handle 1 and the space in the vehicle front part can be further saved.

Further, since the steering device 100 includes the first and second deceleration units 40, 50 for decelerating the rotation of the electric motor 20, a large assisting force is applied to the output shaft 4 without enlarging the electric motor 20 by driving the electric motor 20 at high rotation. Thus, it is possible to reduce the size of the electric motor 20 and suppress the amount of power consumption in the steering device 100.

According to the above first embodiment, the following effects are achieved.

According to the steering device 100, the rotation of the electric motor 20 is decelerated by the first and second deceleration units 40, 50, whereby a large rotational torque is applied to the output shaft 4 to improve an assisting force. Thus, a turning force can be improved in the steering device 100 for converting a steering torque into a turning force by the link mechanism 10 without including a rack and a pinion.

Further, since a large rotational torque can be applied to the output shaft 4 by the first and second deceleration units 40, 50 according to the steering device 100, it is possible to use the small-size electric motor 20 and suppress the amount of power consumption.

Further, according to the steering device 100, a large rotational torque can be applied as an assisting force to the steering shaft 2 by the small-size electric motor 20 to ensure a turning force even if the steering angle of the steering handle is small. By using the bar handle 1 having a small steering angle as the steering handle, the operating parts of the underbody such as the accelerator pedal and the brake pedal can be integrated with the bar handle 1. Thus, in the steering device 100, the turning force of the wheels 6 can be ensured even if the steering handle is the bar handle 1 and a space for the underbody of the vehicle can be saved.

### (Second Embodiment)

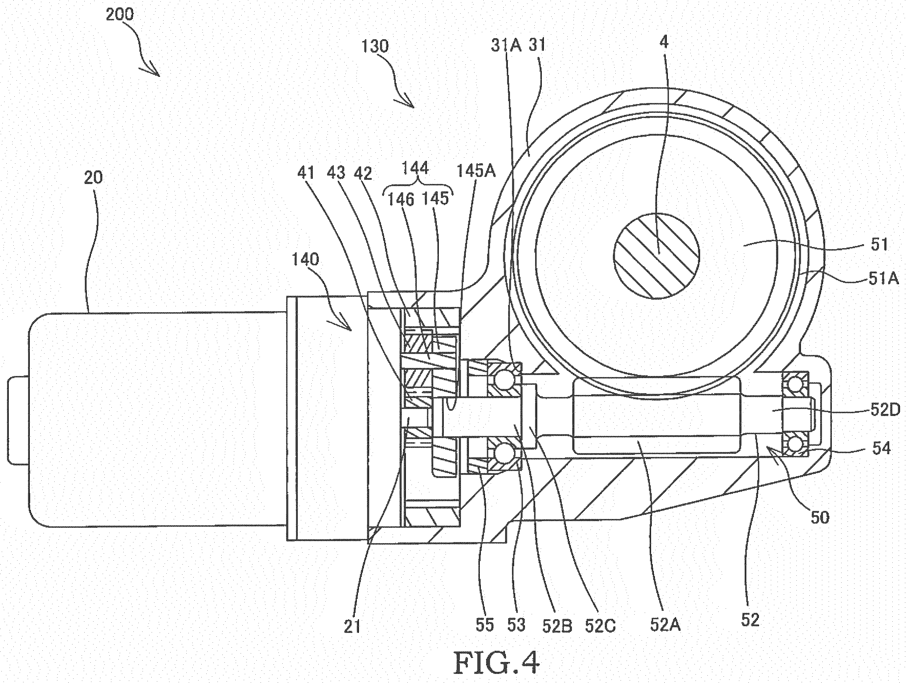

Next, a steering device 200 according to a second embodiment of the present invention is described with reference to FIG. 4. The following description will be made by focusing on differences from the steering device 100 according to the first embodiment, and identical configurations to the steering device 100 have been allocated identical reference symbols in the drawings, and description thereof has been omitted.

In the first embodiment, the rotary shaft 21 of the electric motor 20 is coupled to the sun gear 41 of the first deceleration unit 40 via the motor coupling shaft 22. Further, the carrier 44 of the first deceleration unit 40 includes the flange part 45 with the through hole 45A and the connecting member 47 to be press-fitted into the through hole 45A of the flange part 45, and the worm shaft 52 of the second deceleration unit 50 is inserted into the connecting member 47 to be serration-connected.

Contrary to this, in the steering device 200 according to the second embodiment, a rotary shaft 21 of an electric motor 20 is directly press-fitted into a sun gear 41 and a worm shaft 52 of a second deceleration unit 50 is inserted into a through hole 145A of a flange part 145 in a first deceleration unit 140 to be serration-connected. The steering device 200 differs from the steering device 100 in such points.

As shown in FIG. 4, the steering device 200 includes no motor coupling shaft 22 and the rotary shaft 21 of the electric motor 20 is directly press-fitted into the sun gear 41. Further, a carrier 144 of the first deceleration unit 140 includes the plate-like flange part 145 with the through hole 145A in a radial central part and a plurality of coupling pins 46 provided on the flange part 145 and to be respectively press-fitted into a plurality of planetary gears 43. One end 52B of the worm shaft 52 of the second deceleration unit 50 is inserted into the through hole 145A of the flange part 145 to be serration-connected. As just described, the carrier 144 includes no connecting member 47 in the steering device 100 and the one end 52B of the worm shaft 52 is directly serration-connected to the through hole 145A of the flange part 145.

According to the above second embodiment, the following effects are achieved besides effects similar to those of the above first embodiment.

According to the steering device 200, the rotary shaft 21 of the electric motor 20 is directly press-fitted into the sun gear 41 of the first deceleration unit 140 and the worm shaft 52 of the second deceleration unit 50 is inserted into the flange part 145 of the carrier 144 to be serration-connected. Thus, it is possible to shorten lengths of the first and second deceleration units 140, 50 and reduce the size of a deceleration unit 130.

### (Third Embodiment)

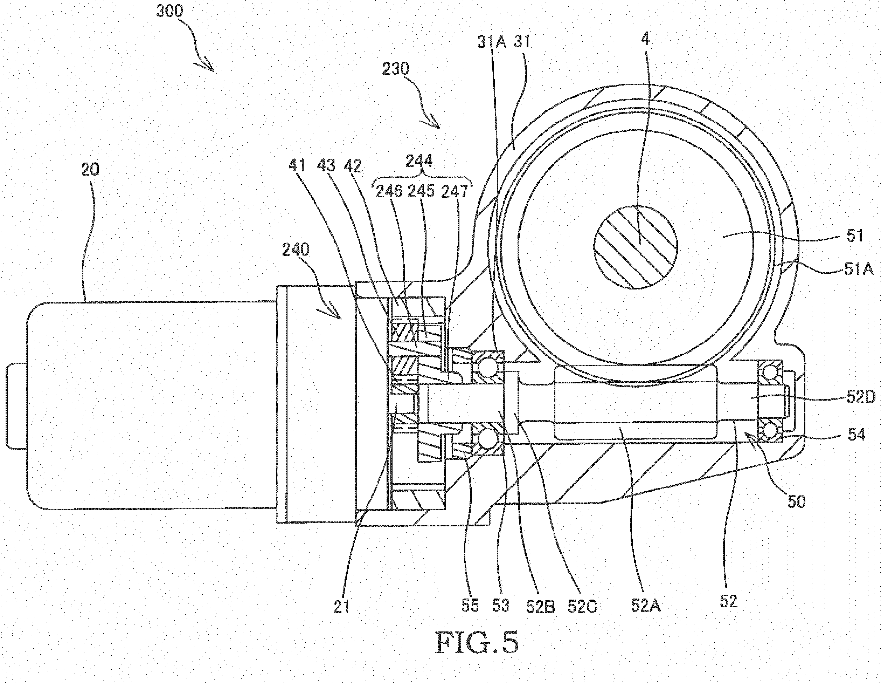

Next, a steering device 300 according to a third embodiment of the present invention is described with reference to FIG. 5. The following description will be made by focusing on differences from the steering device 200 according to the second embodiment, and identical configurations to the steering device 200 have been allocated identical reference symbols in the drawings, and description thereof has been omitted.[0046] In the second embodiment, the one end 52B of the worm shaft 52 of the second deceleration unit 50 is serration-connected to the through hole 145A formed in the flange part 145 of the carrier 144 of the first deceleration unit 140.

Contrary to this, the steering device 300 differs from the steering device 200 in that a carrier 244 includes a tubular part 247 into which one end 52B of a worm shaft 52 is inserted through one end part of the tubular part 247 so that the tubular part 247 is coupled to the worm shaft 52.

As shown in FIG. 5, the carrier 244 of a first deceleration unit 240 in the steering device 300 includes the tubular part 247 into which the one end 52B of the worm shaft 52 is inserted through the one end part of the tubular part 247 so that the tubular part 247 is coupled to the worm shaft 52, a flange part 245 provided to radially extend from another end part of the tubular part 247, and coupling pins 246 provided on the flange part 245 and to be respectively coupled to a plurality of planetary gears 43.

The tubular part 247 of the carrier 244 is formed to have an outer diameter smaller than an inner diameter of a lock nut 55 for holding a bearing 53 by which the one end 52B of the worm shaft 52 is supported, and housed in the lock nut 55. The tubular part 247 may be so formed that a part in an axial direction has an outer diameter smaller than the inner diameter of the lock nut 55 and is housed in the lock nut 55.

According to the above third embodiment, the following effects are achieved besides effects similar to those of the above second embodiment.

According to the steering device 300, the carrier 244 of the first deceleration unit 240 includes the tubular part 247 into which the one end 52B of the worm shaft 52 is inserted through the one end part of the tubular part 247 so that the tubular part 247 is coupled to the worm shaft 52. The part of the tubular part 247 is formed to have the outer diameter smaller than the inner diameter of the lock nut 55 and housed in the lock nut 55. Thus, a coupling length of the carrier 244 and the worm shaft 52 can be extended and a large force can be transmitted from the first deceleration unit 240 to the second deceleration unit 50. Further, by housing the tubular part 247 in the lock nut 55, an axial length of the entire deceleration unit 230 can be shortened and the deceleration unit 230 can be reduced in size.

Embodiments of this invention were described above, but the above embodiments are merely examples of applications of this invention, and the technical scope of this invention is not limited to the specific constitutions of the above embodiments.

In each of the above embodiments, the first deceleration unit 40, 140, 240 is a planetary gear mechanism and the second deceleration unit 50 is a gear mechanism including the worm wheel 51 and the worm shaft 52. Instead of this, the first deceleration unit 40, 140, 240 and the second deceleration unit 50 may be other gear mechanisms including, for example, a spur gear and a bevel gear.

Further, in each of the above embodiments, the steering handle is the bar handle 1. Instead of this, another steering handle such as a steering wheel or a control stick may be used.

The present application claims a priority based on Japanese Patent Application No. 2014-156643 filed with the Japan Patent Office on July 31, 2014, all the contents of which are hereby incorporated by reference.

## Claims

1. A steering device, comprising:
a steering shaft which is rotated by a steering torque input from a steering handle;
an electric motor which applies a rotational torque for assisting the steering torque to the steering shaft;
a first deceleration unit which decelerates and outputs the rotation of the electric motor;
a second deceleration unit which transmits an output of the first deceleration unit to the steering shaft while decelerating the output; and
a link mechanism which turns wheels by converting the rotation of the steering shaft.

2. The steering device according to claim 1, wherein the first deceleration unit is a planetary gear mechanism including:
a sun gear to which a rotary shaft of the electric motor is coupled;
a ring gear which is provided at an outer side of the sun gear;
a plurality of planetary gears which are provided between the sun gear and the ring gear and engaged with each of the sun gear and the ring gear; and
a carrier which couples the plurality of planetary gears to each other.

3. The steering device according to claim 2, wherein the rotary shaft of the electric motor is press-fitted into the sun gear.

4. The steering device according to claim 2, wherein the second deceleration unit includes:
a worm wheel which is coupled to the steering shaft; and
a worm shaft to which the output of the first deceleration unit is transmitted and which is engaged with the worm wheel.

5. The steering device according to claim 4, further comprising:
a bearing which rotatably supports one end of the worm shaft; and
a lock nut which is juxtaposed with the bearing in an axial direction and holds the bearing on one end of the worm shaft,
wherein:
the carrier of the first deceleration unit includes:
a tubular part into which the one end of the worm shaft is inserted through one end part of the tubular part so that the tubular part is coupled to the worm shaft;
a flange part which is provided to radially project from another end part of the tubular part;
a coupling part provided on the flange part and to be coupled to each of the plurality of planetary gears; and
a part of the tubular part of the carrier is formed to have an outer diameter smaller than an inner diameter of the lock nut and housed in the lock nut.

6. The steering device according to claims 1, wherein:
the steering handle has a maximum steering angle of 180° or smaller.
